(19) Europäisches Patentamt
European Patent Office
Office européen des brevets

(11) **EP 3 231 916 B1**

(12) **EUROPEAN PATENT SPECIFICATION**

(45) Date of publication and mention
of the grant of the patent:
**25.09.2019 Bulletin 2019/39**

(21) Application number: **15867941.5**

(22) Date of filing: **20.11.2015**

(51) Int Cl.:
*D04H 1/4242* *(2012.01)*      *D06M 15/256* *(2006.01)*
*H01M 4/88* *(2006.01)*      *H01M 4/96* *(2006.01)*
*H01M 8/02* *(2016.01)*      *H01M 8/10* *(2016.01)*
*H01M 8/0234* *(2016.01)*      *H01M 8/0245* *(2016.01)*
*H01M 8/026* *(2016.01)*      *H01M 8/1018* *(2016.01)*

(86) International application number:
**PCT/JP2015/082730**

(87) International publication number:
**WO 2016/093041 (16.06.2016 Gazette 2016/24)**

(54) **NONWOVEN CARBON FIBER FABRIC, PROCESS FOR PRODUCING NONWOVEN CARBON FIBER FABRIC, AND POLYMER ELECTROLYTE MEMBRANE FUEL CELL**

KOHLEFASERVLIESSTOFF, VERFAHREN ZUR HERSTELLUNG VON KOHLEFASERVLIESSTOFF UND POLYMERELEKTROLYTMEMBRANBRENNSTOFFZELLE

TISSU DE FIBRE DE CARBONE NON-TISSÉ, PROCÉDÉ DE PRODUCTION DE TISSU DE FIBRE DE CARBONE NON-TISSÉ, ET PILE À COMBUSTIBLE À MEMBRANE ÉLECTROLYTIQUE POLYMÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.12.2014 JP 2014249550**

(43) Date of publication of application:
**18.10.2017 Bulletin 2017/42**

(73) Proprietor: **Toray Industries, Inc.**
**Tokyo 103-8666 (JP)**

(72) Inventors:
• **KAJIWARA, Kentaro**
  **Otsu-shi**
  **Shiga 520-8558 (JP)**
• **SHIMOYAMA, Satoru**
  **Otsu-shi**
  **Shiga 520-8558 (JP)**
• **HORINOUCHI, Ayanobu**
  **Otsu-shi**
  **Shiga 520-8558 (JP)**
• **HORIGUCHI, Tomoyuki**
  **Otsu-shi**
  **Shiga 520-8558 (JP)**

(74) Representative: **Mewburn Ellis LLP**
**City Tower**
**40 Basinghall Street**
**London EC2V 5DE (GB)**

(56) References cited:
EP-A1- 1 336 999      EP-A1- 2 357 695
EP-A1- 3 088 582      WO-A1-91/06131
WO-A1-2013/099720      WO-A1-2014/012649
JP-A- H08 287 923      JP-A- 2003 017 076
JP-A- 2004 311 276      JP-A- 2004 327 358
JP-A- 2006 331 786      JP-A- 2009 059 626
JP-A- 2012 069 260      JP-A- 2012 234 791
JP-A- 2013 020 843      JP-A- 2014 135 270
JP-B1- 5 621 949

**Description**

TECHNICAL FIELD

The present invention relates to a nonwoven carbon fiber fabric and a polymer electrolyte fuel cell including a nonwoven carbon fiber fabric as a gas diffusion electrode.

BACKGROUND ART

Among fuel cell systems that generate electricity by reacting fuel with an oxidizer, especially a polymer electrolyte fuel cell is used in power sources for automobiles that run on an electric motor, cogeneration systems for home use, and the like due to its ability to generate electricity at relatively low temperatures around 100°C and its high power density.
Usually, in a polymer electrolyte fuel cell, a fuel gas containing hydrogen and an oxidizer gas containing oxygen are divided by an electrolyte membrane. The fuel-gas-supplied side of the polymer electrolyte fuel cell is referred to as the anode side, and the oxidizer-gas-supplied side of the polymer electrolyte fuel cell is referred to as the cathode side. The fuel gas is supplied to grooves in an anode-side separator and then is diffused into a gas diffusion electrode which is in contact with the separator, and is separated into electrons and protons in an anode catalyst layer which is on the other surface of the gas diffusion electrode (a surface opposite the surface in contact with the separator). Electrons are connected to a load (device) outside the fuel cell through carbon particles in the catalyst layer and a carbon fiber constituting the gas diffusion electrode, and thus a DC current can be drawn from the cell. These electrons travel to the cathode catalyst layer through the cathode gas diffusion electrode, and the protons generated at the anode catalyst layer travel to the cathode catalyst layer through the electrolyte membrane. Furthermore, the grooves in the cathode-side separator are supplied with the oxidizer gas containing oxygen, which is diffused into the gas diffusion electrode in contact with the separator, and, at the cathode catalyst layer on the other surface of the gas diffusion electrode, the oxygen, protons and electrons produce water. The generated water travels from the catalyst layer to the grooves in the cathode-side separator through the gas diffusion electrode, passes through the grooves in the separator, and is discharged from the fuel cell.
A gas diffusion electrode in contact with grooves in a separator is required to have a structure in which a fuel gas or oxidizer gas is readily diffused, and thus is usually formed from a porous material. A technique is proposed in which the porous material is further provided with channels such as grooves which help the function of the grooves in the separator.
For example, Patent Document 1 discloses a technique by which grooves and through holes are formed in a surface of a gas diffusion electrode and thereby the transportation of water generated at an electrocatalyst layer or the transportation of an oxidizer to the electrocatalyst layer is controlled. Patent Document 1 further states that the depth and the width of a groove are adjusted. This makes it possible to improve the transportation of substances in the thickness direction of the gas diffusion electrode through the grooves and the through holes.
Patent Document 2 also discloses a technique by which, since the grooves in the separator alone cannot achieve sufficient gas diffusion and passage, the grooves in the gas diffusion electrode are formed to face the grooves in the separator.
Patent Document 3 discloses a technique by which, for easier discharge of water generated in the catalyst layer into the grooves in the separator, slits are formed in the gas diffusion electrode in parallel to the grooves in the separator.
Patent Document 4 (published 2 November 2016) discloses a carbon fiber nonwoven fabric, on a surface of which a plurality of non-through pores are formed, each having an opening area larger than the average pore area of the carbon fiber nonwoven fabric.
Patent Document 5 discloses a fuel cell comprising a polymer electrolyte membrane having a catalyst layer, a gas diffusion layer and a separator stacked on both surfaces of the polymer electrolyte membrane. The gas diffusion layer is structured with a conductive carbon sheet, which is a mixture of a carbon-base material and a fluorine-base resin.
Patent Document 6 discloses a polymer electrolyte fuel cell comprising a membrane-electrode assembly and a pair of separator plates sandwiching the assembly, wherein each of the electrodes has a catalyst layer and a gas diffusion layer made of a conductive carbon fiber sheet in contact with the membrane.
Patent Document 7 discloses an electrically conductive sheet material comprising carbon fibers, which has ridges on both sides of the material and which is used in a redox flow battery.

PRIOR ART DOCUMENTS

PATENT DOCUMENTS

Patent Document 1: Japanese Patent Laid-open Publication (Translation of PCT Application) No. 11-511289
Patent Document 2: JP 2003-17076 A
Patent Document 3: JP 2009-140810 A
Patent Document 4: EP 3088582 A1
Patent Document 5: EP 2357695 A1
Patent Document 6: EP 1336999 A1
Patent Document 7: WO 2014/012649 A1

SUMMARY OF THE INVENTION

PROBLEMS TO BE SOLVED BY THE INVENTION

As described above, when not only the separator but also the gas diffusion electrode has grooves corresponding to the grooves in the separator, it is possible to improve water discharge performance and gas diffusibility. However, the inventors of the present invention studied and found that, particularly when the cell generates electricity in humid conditions, a problem arises in that the water remains in the grooves in the gas diffusion electrode and thereby the water discharge performance is reduced, resulting in a decrease in gas diffusibility instead of improving gas diffusibility.

An object of the present invention is to provide a nonwoven carbon fiber fabric suitable as a gas diffusion electrode, which achieves good water discharge performance and maintains high gas diffusibility even when electricity is generated in particularly humid conditions.

SOLUTIONS TO THE PROBLEMS

In order to attain this object, the present invention provides a nonwoven carbon fiber fabric which has ridges on only one surface thereof and which is provided with a water repellent, the ridges having a pitch L2 that is 20 $\mu$m or greater and less than 500 $\mu$m; wherein the ridges denote linear projections which are regularly arranged on the surface of the nonwoven carbon fiber fabric so as to be substantially parallel to each other, the height H1 of a ridge is 10 $\mu$m or more, and the pitch L2 is the mean of the distances between center lines of adjacent ridges.

EFFECTS OF THE INVENTION

With the use of a nonwoven carbon fiber fabric of the present invention as a gas diffusion electrode, it is possible to prepare a fuel cell that is good in water discharge performance and provides good power generation performance.

BRIEF DESCRIPTION OF THE DRAWINGS

Fig. 1 is a cross-sectional view schematically illustrating a cell structure of a fuel cell of the present invention.
Fig. 2 is a cross-sectional view of one embodiment of a nonwoven carbon fiber fabric of the present invention, which is given for describing the form of ridges.
Fig. 3A schematically illustrates a channel shape in a column form in a separator.
Fig. 3B schematically illustrates a channel shape in a parallel form in a separator.
Fig. 3C schematically illustrates a channel shape in a multi-parallel form in a separator.
Fig. 3D schematically illustrates a channel shape in a serpentine form in a separator.
Fig. 3E schematically illustrates a channel shape in an interdigitated form in a separator.
Fig. 4 is a photograph taken from above of one aspect of a nonwoven carbon fiber fabric of the present invention.

EMBODIMENTS OF THE INVENTION

[Nonwoven carbon fiber fabric]

A nonwoven carbon fiber fabric in the present invention is a web or a sheet made of a carbon fiber. A carbon fiber is a fiber obtained by carbonizing a carbon fiber precursor by heating the carbon fiber precursor in an inert gas atmosphere, and the nonwoven carbon fiber fabric is a fabric obtained by carbonizing a nonwoven carbon-fiber-precursor fabric by heating the fabric in an inert gas atmosphere. The carbon fiber precursor will be described later. Examples of a web include: dry-laid webs such as parallel-laid webs and cross-laid webs; air-laid webs; webs made by wet forming; and spunbonded webs, melt-blown webs, and electrospun webs which are obtained by extrusion. Examples of a sheet include sheets obtained by mechanically entangling these webs, sheets obtained by thermally bonding these webs, and sheets obtained by bonding these webs with a binder.

A carbon fiber with a smaller fiber diameter more readily achieves a greater apparent density and gives a highly electrically and thermally conductive nonwoven carbon fiber fabric, but tends to reduce the average pore size of the nonwoven carbon fiber fabric and thus reduce water discharge performance and gas diffusibility. The fiber diameter of the carbon fiber is preferably determined appropriately according to the purpose of the nonwoven carbon fiber fabric. In the case where the nonwoven carbon fiber fabric is used as a typical gas diffusion electrode, the fiber diameter is preferably 3 to 30 $\mu$m, more preferably 5 to 20 $\mu$m.

When the contact points of carbon fiber filaments constituting the nonwoven carbon fiber fabric have a carbonate as a binder attached thereto, the contact areas of the carbon fiber filaments at the contact points increase, resulting in high electric and thermal conductivity. One way to provide such a binder is to impregnate a carbonized nonwoven carbon fiber fabric with a thermosetting resin or to spray a thermosetting resin to a carbonized nonwoven carbon fiber fabric and heating the fabric in an inert atmosphere again. The thermosetting resin usable in this case is a phenol resin, an epoxy resin, a melamine resin, a furan resin, or the like. Particularly preferred of these is a phenol resin. Furthermore, as described later, a method by which a thermoplastic resin is mixed in the nonwoven carbon-fiber-precursor fabric in advance is also preferred.

The average pore size of the nonwoven carbon fiber fabric of the present invention is preferably 40 $\mu$m or more, more preferably 45 $\mu$m or more, even more preferably 50 $\mu$m or more. The upper limit of the average pore size is not particularly limited, but is preferably 100 $\mu$m or less, more preferably 80 $\mu$m or less. An average pore size of 40 $\mu$m or more provides high performance in gas diffusion and water discharge. An average pore size of 100 $\mu$m or less is advantageous in that drying out is readily prevented. As used herein, the average pore size of the nonwoven carbon fiber fabric denotes a value determined by a mercury press-in method, which is calculated on the assumption that the surface tension $\sigma$ of mercury is 480 dyn/cm and that the contact angle between mercury and the nonwoven carbon fiber fabric is 140°. The measurement by a mercury press-in method may be performed by, for example, using PoreMaster (available from Quantachrome) or the like.

[Ridge] The nonwoven carbon fiber fabric of the present invention has ridges on its surface. The ridges denote linear projections which are regularly arranged on the surface of the nonwoven carbon fiber fabric so as to be substantially in parallel to each other. The presence of such ridges may be determined by, for example, taking an image by laser scanning of a ridged surface of a nonwoven carbon fiber fabric with a field of view of 500 $\mu$m to 5 mm with a laser microscope, performing tilt correction with the use of shape analysis software, and displaying different heights in different colors.

In the present invention ridges are formed only on one surface of the nonwoven carbon fiber fabric. As described herein (not part of the invention), the ridges may be formed on both surfaces of the nonwoven carbon fiber fabric. If this is the case, a plane that passes through the tops of ridges on the surface opposite the ridged surface to be observed is regarded as the bottom surface. However, in the case where the nonwoven carbon fiber fabric of the present invention is used as a gas diffusion electrode, it is only necessary to achieve the effect of easing the discharge of water drops generated at the surface of the gas diffusion electrode which is in contact with the separator. Therefore, the ridges only on one surface are enough and are preferred also in view of production. Therefore, the following description mainly discusses a nonwoven carbon fiber fabric of the present invention that has ridges only on one surface and, in the description, the surface with the ridges is referred to as a "ridged surface" and the opposite surface with no ridges is referred to as a "bottom surface". Furthermore, unless otherwise specified, the following description is based on the assumption that the nonwoven carbon fiber fabric of the present invention is horizontally placed with the bottom surface facing down and that the ridged-surface-side of the fabric is regarded as "upside" and the bottom surface side of the fabric is regarded as "downside".

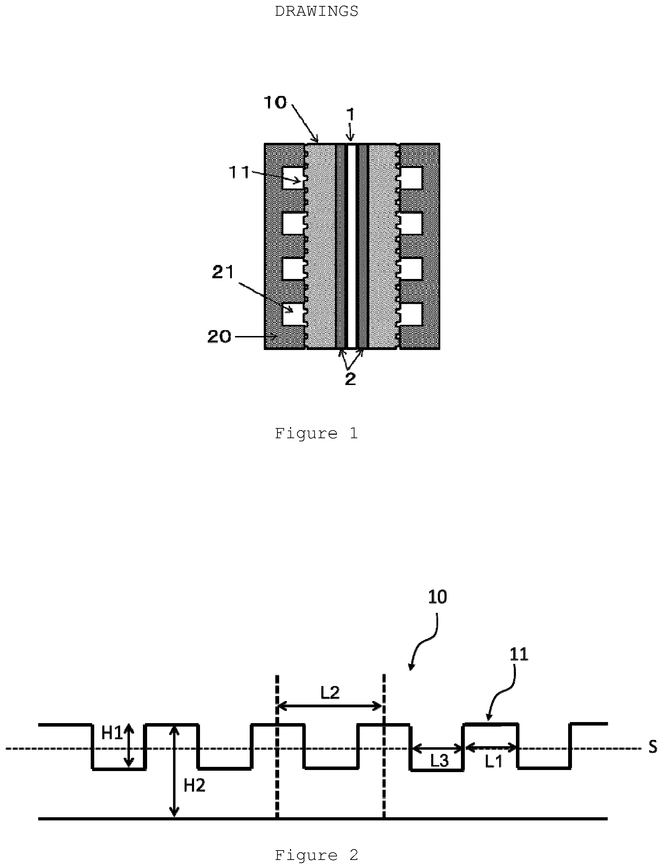

The following describes the form of ridges with reference to the reference signs in Fig. 2 by using as an example a nonwoven carbon fiber fabric that has linear ridges and that is a typical embodiment of the present invention. It should be noted, however, that these reference signs do not imply any limitation on the present invention.

In a fuel cell including a nonwoven carbon fiber fabric of the present invention as a gas diffusion electrode, the water drops generated through a reaction are intended to be discharged from the fuel cell not by traveling in furrows but by traveling over the top faces of ridges. For such water discharge effects to be achieved, the pitch L2 of the ridges is set at less than 500 $\mu$m.

The pitch of the ridges is the mean of the distances between the center lines of adjacent ridges, and may be calculated from the number of ridges of the nonwoven carbon fiber fabric in a width that is perpendicular to the ridges. Ridges having a smaller pitch achieve higher water repellency, and therefore the pitch of the ridges is preferably less than 450 $\mu$m, more preferably less than 400 $\mu$m. On the other hand, ridges having a larger pitch are less prone to breakage, and therefore the pitch is 20 $\mu$m or greater, preferably 50 $\mu$m or greater.

In the present invention, the ratio of ridge area is defined as follows.

1) A plane that passes through the bottommost portions of furrows and that is parallel to the bottom surface is defined as a reference surface for ridges.

2) Simulate a plane S that passes through the midpoint of a normal line extending from the top of a ridge to the reference surface for ridges and that is parallel to the reference surface (and to the bottom surface). The width of the ridge at the plane S is defined as L1.

3) With the pitch of the ridges defined as L2, the value represented by L1/L2 is defined as the ratio of ridge area.

If the pitch of the ridges is within the above-described range, as the ratio of ridge area is smaller, the contact area of a water drop on the surface of the nonwoven carbon fiber fabric is smaller, which improves water repellency. Therefore, the ratio of ridge area is preferably 0.9 or less, more preferably 0.7 or less, even more preferably 0.5 or less. On the other hand, increasing the ratio of ridge area improves electric conductivity and thermal conductivity, and therefore the ratio of ridge area is preferably 0.1 or more, more preferably 0.2 or more.

The ratio of ridge area may be determined by, for example: taking an image by laser-scanning of a ridged surface of a nonwoven carbon fiber fabric with a field of view of 500 $\mu$m to 5 mm with a laser microscope; performing tilt correction with the use of shape analysis software; displaying the height profiles in a direction perpendicular to the direction in which the ridges extend; and measuring the width of each ridge at a height at the midpoint of a normal line extending from the top of the ridge to the reference surface for ridges . The mean width of ridges found from three or more height profiles in the observed field of view is used as a central value. It should be noted that, in each height profile, a plane that passes through the bottommost portion of a furrow and that is parallel to the bottom surface is regarded as a reference surface.

The height H1 of a ridge is 10 $\mu$m or more, preferably 20 $\mu$m or more. As used herein, the height of a ridge denotes the length of a normal line extending from the top of the ridge to the reference surface for ridges. The upper limit of the height of a ridge is not particularly limited, provided that the strength of the nonwoven carbon fiber fabric is maintained.

Furthermore, the ridges high enough with respect to the width L3 (= L2 - L1) of a furrow make the effects of the present invention outstanding. For this reason, in particular, the value obtained by dividing the height H1 of a ridge by the width L3 of a furrow is preferably 0.1 or more, more preferably 0.2 or more.

Furthermore, a preferred aspect of the present invention is such that, as described later, the ridges are formed by pressing, against the fabric, a shaping member having indentations and protrusions corresponding to the ridges. A nonwoven carbon fiber fabric obtained in this manner has different apparent densities between ridges and furrows. In this case, the water generated at the catalyst layer preferentially travels over the ridges with a low density to enter the channels in the separator, whereas a gas travels in the furrows with a high density. This achieves high gas diffusibility as well as improves water discharge performance. For such a function to be achieved, the ridges and furrows need to have different densities. Therefore, it is preferable that the value obtained by dividing the height H1 of a ridge by the thickness H2 of the nonwoven carbon fiber fabric (such a value is represented as H1/H2) be more than 0.30, more preferably more than 0.35.

The wall of a ridge may be substantially perpendicular to the bottom surface or may be at an angle to the normal direction. That is, a cross section perpendicular to the direction in which the ridges extend may be in the shape of a rectangle, a trapezoid, or substantially in the shape of a semicircle (inverted U shape).

The form of the ridges on the ridged surface viewed from above is not particularly limited, provided that the ridges are in lines which are regularly arranged and thus the pitch of the ridges is recognizable. The ridges may be in the form of straight lines, in a zig-zag form in which the straight lines are curved repeatedly up and down and left and right, or in the form of lines with curvature such as sinusoidal waves. In the case where the ridges are not in the form of straight lines and are, for example, in a zig-zag form or in the form of sinusoidal waves, it is assumed that the direction in which the ridges extend is the direction of extension of straight lines that approximate the ridges.

On the ridged surface, the mobility of water drops in the direction in which the ridges extend is greater than that in the direction perpendicular to the ridges . That is, water drops more readily travel in the direction in which the ridges extend. For this reason, in the case where a fuel cell is structured by using a nonwoven carbon fiber fabric of the present invention as a gas diffusion electrode, the water discharge performance is improved by stacking the separator and the nonwoven carbon fiber fabric of the present invention in a manner such that the direction in which the channels in the separator extend is parallel to the direction in which the ridges extend on the nonwoven carbon fiber fabric. Therefore, this aspect is preferable for use in an environment in which electricity is generated in the presence of excessive water. For higher water discharge performance to be achieved in this case, the ridges are preferably in the form of straight lines . On the other hand, the water retention performance is improved by stacking the separator and the nonwoven carbon fiber fabric of the present invention in a manner such that the direction in which the channels in the separator extend intersects the direction in which the ridges extend on the nonwoven carbon fiber fabric. Therefore, this aspect is preferable for use in an environment in which electricity is generated under water scarcity.

Meanwhile, a nonwoven carbon fiber fabric in which carbon fiber filaments of the gas diffusion electrode are oriented in-plane in one direction is also preferably used. In this case, the ridges are preferably perpendicular to the direction of orientation of the carbon fiber filaments . When such a nonwoven carbon fiber fabric is used as a gas diffusion electrode, and the fabric and the separator are placed in a manner such that the direction in which the ridges extend is parallel to the channels in the separator, that is, in a manner such that the direction of orientation of the carbon fiber filaments in the gas diffusion electrode is perpendicular to the channels in the separator, the dispersibility of water and the gas in the direction of orientation of the carbon fiber filaments increases during operation of the fuel cell, and the water generated in the gas diffusion electrode readily travels to the channels in the separator. It should be noted that the in-plane orientation of the carbon fiber filaments in one direction may be confirmed by: measuring the tensile strengths of four samples per direction in eighteen directions each 10 degrees apart (72 samples in total); approximating the tensile strengths at the angles by an ellipse in polar coordinates to find the ratio of the length of the major axis to that of the minor axis (such a ratio is represented as major axis/minor axis); and verifying that the ratio is above 1.05.

A method of forming ridges may be selected appropriately from, for example, a method by which a carbonized, fired nonwoven carbon fiber fabric is processed by shaving with a laser, a needle, or the like, a method by which the ridges are formed by controlling the arrangement of carbon fiber filaments when the carbon fiber is formed into a sheet, and a method by which the ridges are formed on a nonwoven fabric formed from a carbon fiber precursor by printing or embossing and thereafter carbonized by heat treatment. In particular, from a viewpoint of preventing breakage of a carbon fiber and achieving high electric conductivity, it is preferable to use a method by which the ridges are formed on a nonwoven fabric formed from a carbon fiber precursor by embossing and thereafter carbonized by heat treatment. This method will be described later in detail.

[Water repellent]

For the nonwoven carbon fiber fabric of the present invention to have water repellency, the nonwoven carbon fiber fabric has to be further provided with a water repellent. The water repellent is not limited to a particular kind, provided that the water repellent is a substance that has the effect of increasing the contact angle of water drop on the surface of the nonwoven carbon fiber fabric. Examples of the water repellent include fluororesins such as PTFE, FEP, and PVDF and silicone resins such as PDMS. The fabric may be made water-repellent by, for example: giving any of these water repellents in the form of powder to the nonwoven carbon fiber fabric; melt impregnation with any of these water repellents; or printing, transfer, or impregnation using a solution or a dispersion of any of these water repellents. It should be noted that the contact angle of water drop in this description refers to the mean of the values obtained by dropping ten drops of water 10 μL each on the ridged surface of the nonwoven carbon fiber fabric at a temperature of 20°C and a humidity of 60%. The contact angle of water drop may be measured with the use of, for example, an automatic contact angle meter DMs-601 (available from Kyowa Interface Science Co., Ltd.).

It is preferable that, in the nonwoven carbon fiber fabric of the present invention, the contact angle of water drop on the ridged surface be 100 degrees or more, which is achieved by providing a water repellent. The water repellency is preferably high from a viewpoint of improving the water discharge performance of a fuel cell, and therefore the contact angle of water drop on the ridged surface is preferably 120 degrees or more, more preferably 140 degrees or more.

In the nonwoven carbon fiber fabric of the present invention, water drops travel over the top faces of the ridges and therefore the water repellent only needs to be given to the ridges. This aspect is preferred also in that it is expected that the water repellent localized at the ridges gives an adequate moisture retention effect to the gas diffusion electrode during the operation of the fuel cell, and the balance between water discharge performance and gas diffusibility is readily achieved and, in addition, only small amount of the water repellent is required.

The locality of the water repellent at the ridges can be confirmed by: mapping the atoms specific to the water repellent, for example, fluorine atoms in a fluororesin or the silicon atoms in a silicone resin, on an SEM image of the ridged surface of a nonwoven carbon fiber fabric taken with a field of view of 500 μm to 5 mm with the use of a scanning electron microscope/energy dispersive x-ray spectrometer (SEM/EDX); and checking whether the mapped positions match the positions of the ridges appearing on the SEM image. Such a condition can be formed by, for example, a method by which a water repellent is provided by printing or transfer, a method by which a water repellent is attached to the desired positions by spraying through a mask, or a method by which a nonwoven carbon fiber fabric is impregnated with a solution or a dispersion and is dried by heating the ridged surface so that the water repellent is selectively attached to the ridges which are easy to dry.

<Polymer electrolyte fuel cell>

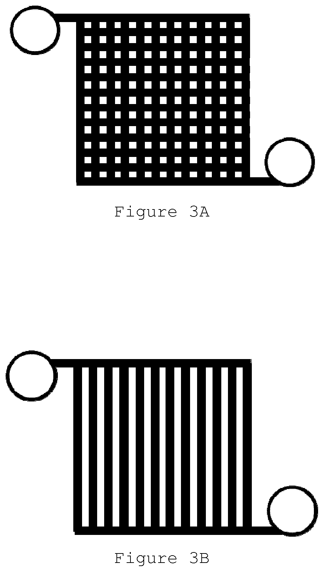

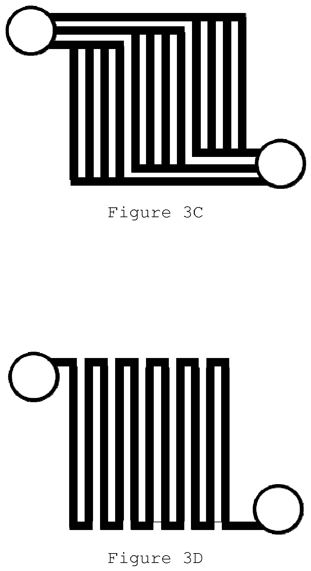

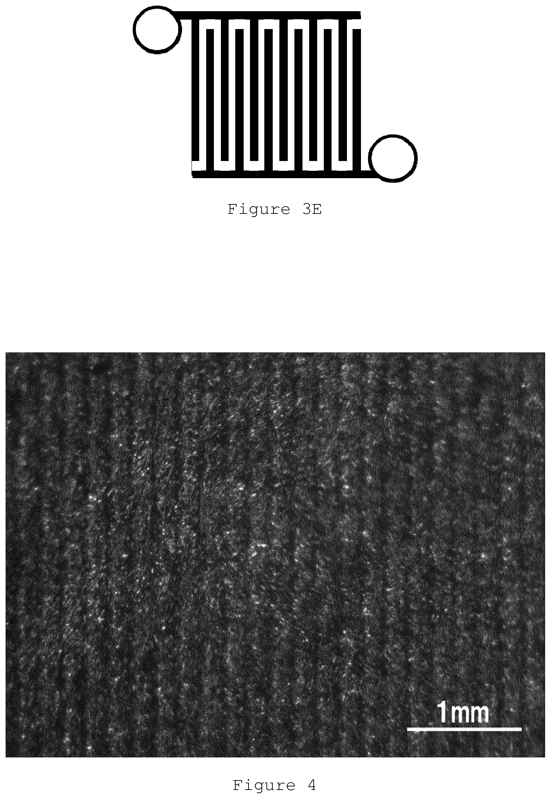

A typical single cell of a polymer electrolyte fuel cell is formed of, as illustrated in Fig. 1: an electrolyte membrane 1; catalyst layers 2 disposed at the opposite sides of the electrolyte membrane 1; an anode-side gas diffusion electrode 10 and a cathode-side gas diffusion electrode 10 sandwiching the catalyst layers 2; and a pair of separators 20 sandwiching the gas diffusion electrodes 10. Each of the separators 20 is usually a separator that has, in its surface, channels 21 in the form of parallel grooves for discharge of water generated through a power generation reaction. As used herein, the channels in the form of parallel grooves denote channels in which mainly a plurality of grooves having a continuous linear indentation are regularly arranged in parallel to each other. The concept of the channels in the form of parallel grooves includes, for example, channel forms such as a column form shown in Fig. 3A, a parallel form shown in Fig. 3B, a multi-parallel form shown in Fig. 3C, a serpentine form shown in Fig. 3D, an interdigitated form shown in Fig. 3E, and a combination of any of these forms.

In the case where the nonwoven carbon fiber fabric of the present invention is used as a gas diffusion electrode of a fuel cell, the nonwoven carbon fiber fabric is disposed so that the ridged surface of the nonwoven carbon fiber fabric is in contact with the channeled surface of a separator. Since the ridged surface is in contact with the channels in the separator, the generated water drops are pushed by the gas flowing in the channels, and the water drops readily travel over the ridges 11. This improves water discharge performance.

Furthermore, the separator is preferably placed so that the direction in which the channels in the form of parallel grooves extend is parallel to the ridges on the gas diffusion electrode, because this makes the movement of water drops smoother. This arrangement is more preferably structured such that a nonwoven carbon fiber fabric is used in which carbon fiber filaments are oriented in-plane in one direction and the ridges extend in the direction perpendicular to the direction of orientation of the carbon fiber filaments and that the ridges are parallel to the channels in the separator, because this further improves the water discharge performance and gas diffusibility in the gas diffusion electrode.

From a viewpoint of improving water discharge performance, the channels in the separator are preferably in a parallel form or an interdigitated form, and particularly preferably in a parallel form which readily reduces pressure loss in the channels.

<Process for producing nonwoven carbon fiber fabric>

One preferable process for producing a nonwoven carbon fiber fabric of the present invention is a process including the steps of: A) forming ridges on a surface of a nonwoven carbon-fiber-precursor fabric by pressing, against the surface of the nonwoven carbon-fiber-precursor fabric, a shaping member having indentations and protrusions corresponding to the ridges; B) carbonizing the nonwoven carbon-fiber-precursor fabric obtained in step A) to obtain a nonwoven carbon fiber fabric; and C) giving a water repellent to the nonwoven carbon fiber fabric obtained in step B).

[Nonwoven carbon-fiber-precursor fabric]

A carbon fiber precursor is a fiber that will become a carbon fiber after firing. The carbon fiber precursor preferably has a carbonization rate of 15% or more, more preferably a carbonization rate of 30% or more. The carbon fiber precursor for use in the present invention is not limited to a particular kind. Examples include: infusible polyacrylonitrile (PAN)-based fibers (PAN-based nonflammable fibers), infusible pitch-based fibers, polyvinyl alcohol-based fibers, cellulose-based fibers, infusible lignin-based fibers, infusible polyacetylene-based fibers, infusible polyethylene-based fibers, and polybenzoxazole-based fibers. In particular, a PAN-based nonflammable fiber, which is highly tenacious and stretchable and which is easy to process, is preferred. It should be noted that the carbonization rate can be found using the following equation.

```
Carbonization rate (%) = weight after firing/weight before

firing × 100
```

A nonwoven carbon-fiber-precursor fabric is a web or a sheet formed from a carbon fiber precursor. The web may be a dry-laid web such as a parallel-laid web or a cross-laid web, an air-laid web, a web made by wet forming, or a spunbonded web, a melt-blown web, or an electrospun web which is obtained by extrusion. The sheet may be a sheet obtained by mechanically entangling these webs, a sheet obtained by thermally bonding these webs, or a sheet obtained by bonding these webs with a binder. In the case where a PAN-based fiber obtained by solution spinning is made infusible to form a web, the web is preferably a dry-laid web or a wet-laid web because a uniform sheet is readily obtained. Of these, a sheet obtained by mechanically entangling dry-laid webs is particularly preferred because its shape stability can be easily maintained during the process.

Furthermore, a parallel-laid web obtained using a card allows for the in-plane orientation of carbon fiber precursor filaments in one direction. As with the parallel-laid web, a cross-laid web also allows for the in-plane orientation of carbon fiber precursor filaments in one direction by performing cross-laying more frequently, and a web made by wet forming also allows for the in-plane orientation of carbon fiber precursor filaments in one direction by speeding up the process. Furthermore, by applying tension to a web or a nonwoven fabric in the process, it is also possible to orient carbon fiber precursor filaments in-plane in one direction.

Furthermore, as described above, an arrangement in which the intersections of carbon fiber filaments of the nonwoven carbon fiber fabric have a carbonate as a binder attached thereto is preferable because high electric conductivity and thermal conductivity are achieved. Such a nonwoven carbon fiber fabric may be produced by providing a carbide precursor to the nonwoven carbon-fiber-precursor fabric in advance. A method of providing a carbide precursor is not particularly limited. Examples include a method by which a nonwoven carbon-fiber-precursor fabric is impregnated with a carbide precursor solution or a carbide precursor solution is sprayed to the nonwoven carbon-fiber-precursor fabric, and a method by which a thermoplastic resin fiber which will become a carbide precursor is mixed in advance in the nonwoven carbon-fiber-precursor fabric.

In the case where a nonwoven carbon-fiber-precursor fabric is impregnated with a carbide precursor solution or a carbide precursor solution is sprayed to the nonwoven carbon-fiber-precursor fabric, a thermosetting resin such as a phenol resin, an epoxy resin, a melamine resin, or a furan resin may be used. Particularly preferred of these is a phenol resin because of its high carbonization yield. However, in the case where the nonwoven carbon-fiber-precursor fabric is impregnated with a thermosetting resin solution, a difference occurs in behavior of shrinkage between the carbon fiber precursor and the binder resin during the carbonization process, resulting in likeliness to lower the smoothness of the nonwoven carbon fiber fabric as well as likeliness to cause a migration phenomenon which is the movement of a solution to the surface of the nonwoven carbon fiber fabric when dried, and thus uniform treatment tends to be difficult.

In contrast, a method by which a thermoplastic resin fiber which will become a binder is mixed in advance in the nonwoven carbon-fiber-precursor fabric is most preferable because this method achieves a uniform ratio of the carbon fiber precursor to the binder resin in the nonwoven fabric, and also causes little difference in behavior of shrinkage between the carbon fiber precursor and the binder resin. Preferred of such thermoplastic resin fibers are polyester fibers, polyamide fibers, and polyacrylonitrile fibers, which are relatively inexpensive.

The amount of the binder to be mixed is, for an improvement in strength, electric conductivity, and thermal conductivity of the nonwoven carbon fiber fabric, preferably 0.5 parts by mass or more, more preferably 1 part by mass or more, with respect to 100 parts by mass of the carbon fiber precursor. Furthermore, for an improvement in water discharge performance, the amount is preferably 80 parts by mass or less, more preferably 50 parts by mass or less.

It should be noted that, alternatively, the binder may be provided by, in step A which is described later, forming ridges on the nonwoven carbon-fiber-precursor fabric and thereafter impregnating the fabric with a binder solution or spraying the binder solution to the fabric. Alternatively, the binder may be provided by, in step B which is described later, performing a process of impregnating the fired nonwoven carbon fiber fabric with a binder solution or spraying the binder solution to the fired nonwoven carbon fiber fabric and firing the fabric again. However, if the binder is provided after the ridges are formed, the binder solution tends to remain around the ridges and the amount of attachment of the binder tends to become uneven. Therefore, the binder is preferably provided before the ridges are formed.

It is further preferable that, in view of improving electric conductivity, a conductive aid be added to the thermoplastic resin fiber which is the binder or to the solution with which the fabric is impregnated or which is to be sprayed to the fabric. Examples of such a conductive aid include carbon black, carbon nanotubes, carbon nanofibers, milled fibers of carbon fibers, and graphite.

On the other hand, a nonwoven carbon fiber fabric with no binders has the virtue of not being easily broken because of its great softness despite its inferior electric conductivity, and thus is also a preferred aspect.

[Step A]

Step A is a step of forming ridges on a surface of a nonwoven carbon-fiber-precursor fabric. In step A, it is preferable that the ridges be formed by a method of pressing, against the surface of the nonwoven carbon-fiber-precursor fabric, a shaping member having indentations corresponding to the ridges to be formed, that is, it is preferable that the ridges be formed by embossing. Alternatively, the ridges may be provided, for example, sequentially by a water jet method. However, since this method involves treating with a fluid, a problem arises in that a sharp shape, which is represented by a value of 0.1 or more which is obtained by dividing the height of a ridge by the width L3 of a furrow as described above, cannot be easily imparted to the ridge. Examples of embossing include a method by which continuous pressing is performed with the use of an emboss roll with indentations and protrusions corresponding to the ridges and furrows and a flat roll, and a method by which batch pressing is performed with the use of a plate with the same indentations and protrusions and a flat plate.

The nonwoven carbon-fiber-precursor fabric shrinks to some extent upon firing, and therefore the pitch of the indentations in the shaping member for forming the ridges has to be larger than the pitch of the ridges on the resulting nonwoven carbon fiber fabric to some degree. Therefore, the pitch of the indentations is usually preferably 600 $\mu$m or less. However, the pitch can be determined appropriately by a person skilled in the art according to types of carbon fiber precursor to be used and firing conditions.

The fabric is pressed preferably with the use of a heated roll and/or plate so that the fabric will not recover its shape (so that the ridges will not disappear) in the firing process in step B which is described later. The heating temperature in this process is preferably 160°C to 280°C, more preferably 180°C to 260°C, in view of the shape stability of the ridges on a nonwoven fabric structure formed from a carbon fiber precursor.

Furthermore, it is also a preferred aspect that the pressing using a roll and/or plate with no indentations or protrusions is performed before or after step A to control the density and thickness of the resulting nonwoven carbon fiber fabric.

[Step B]

Step B is a step of carbonizing the nonwoven carbon-fiber-precursor fabric obtained in step A. The carbonization method is not limited to a particular kind, and may be a method known in the field of carbon fiber materials. Firing in an inert gas atmosphere is preferred. The firing in an inter gas atmosphere is preferably performed in a manner such that: carbonization is performed at atmospheric pressure while raising the temperature from room temperature to 800°C or higher over a duration of 2 hours or more while supplying an inert gas such as nitrogen or argon; and then lowering the temperature to room temperature over a duration of 2 hours or more. The temperature for the carbonization is preferably 1500°C or higher, more preferably 1900°C or higher, because such a temperature readily achieves high electric conductivity and thermal conductivity. On the other hand, in consideration of the operation cost of the furnace, the temperature is preferably 3000°C or lower.

In the case where the nonwoven carbon fiber fabric is used as a gas diffusion electrode of a polymer electrolyte fuel cell, the form of the nonwoven carbon-fiber-precursor fabric and the conditions for the carbonization are preferably controlled so that the thickness after carbonization will be 30 to 400 $\mu$m and the density after carbonization will be 0.2 to 0.8 g/cm$^3$.

[Step C]

Step C is a step of giving a water repellent to the nonwoven carbon fiber fabric obtained in step B. The fabric may be made water-repellent by impregnating the nonwoven carbon fiber fabric with a water repellent such as a fluororesin such as PTFE, FEP, or PVDF or a silicone resin such as PDMS in the form of powder in a fluidized bed or the like by vibration impregnation or melt impregnation, or by printing, transfer, or impregnation or the like using a solution or a dispersion of the water repellent. One preferable aspect of the present invention, which is a method by which a water repellent is selectively attached to the ridges, is, for example, a method by which a water repellent is attached to desired positions by printing, transfer, or spraying through a mask, or a method by which a nonwoven carbon fiber fabric is impregnated with a solution or a dispersion and is dried by heating the ridged surface so that the water repellent is selectively attached to the ridges. In the case where the nonwoven carbon fiber fabric is used as a gas diffusion electrode of a polymer electrolyte fuel cell, it is also a preferred aspect that, in view of improving electric conductivity and thermal conductivity, a conductive aid such as carbon black is mixed to the dispersion of the water repellent in advance.

EXAMPLES

The data in examples were obtained in the following manner.

1. Contact angle of water drop

The contact angle of water drop was measured with the use of an automatic contact angle meter (DM-501, available from Kyowa Interface Science Co., Ltd.) by placing a water drop of 10 $\mu$L on a ridged surface. The mean of the measured values at eight out of ten different points, which exclude the maximum and minimum values, was used as the contact angle of each sample.

2. Condition of how water repellent is attached

In regard to a ridged surface (surface facing a separator) of a gas diffusion electrode, fluorine atoms were mapped on an SEM image with an SEM/EDX, and a surface on which the fluorine atoms were localized at the ridges was evaluated as ○, a surface on which the ridges had a portion where fluorine atoms were localized was evaluated as Δ, and a surface on which the fluorine atoms were not localized at the ridges was evaluated as ×.

3. Power generation performance

The electric current density at a voltage of 0.2 V was measured under the following conditions: cell temperature was 60°C, dew points of hydrogen and air were 60°C, flow rates of hydrogen and air were 1000 cc/min. and 2500 cc/min., respectively, and gas exit was open (pressureless).

[Example 1]

With the use of a continuous pressing machine having a combination of a roller with no indentations or protrusions and a roller with indentations and protrusions (the width of an indentation is 225 $\mu$m, the pitch of indentations is 450 $\mu$m, and the depth of an indentation is 100 $\mu$m), a nonwoven PAN-based nonflammable fiber fabric formed from a needle-punched parallel-laid web was pressed at 260°C and thereby ridges were formed which extend perpendicularly to the direction of orientation of carbon fiber filaments. Next, the temperature was raised from room temperature to 2200°C over a duration of 3 hours and carbonization was performed at 2200°C for 15 minutes in an inert gas atmosphere. Then, the fabric was impregnated with an aqueous PTFE dispersion having a solid content of 3 wt% and thereby the aqueous PTFE dispersion was provided to the fabric so that the amount of solid content attached to the gas diffusion electrode would be 5 wt%, the fabric was hot-air dried at 130°C with the use of a hot air drier, such that a nonwoven carbon fiber fabric having ridges on one surface and provided with a water repellent was obtained.
Furthermore, a paste containing equal amounts of carbon black and PTFE was applied to the bottom surface (surface with no ridges) at 20 g/m$^2$ and dried, and thereafter treated with heat at 380°C for 15 minutes, such that a microporous layer was formed.
Catalyst layers formed of platinum on carbon and Nafion (registered trademark, available from DuPont, the amount of platinum in the layer is 0.2 mg/cm$^2$) were bonded to both sides of a fluorine-based electrolyte membrane Nafion 212 by hot pressing, such that a catalyst-coated membrane (CCM) was produced.
Nonwoven carbon fiber fabrics provided with a water repellent were placed on both sides of the CCM so that the bottom surface of each fabric would face the CCM and hot-pressed again, such that a membrane electrode assembly (MEA) was obtained.
A separator having parallel channels (width: 1mm, pitch: 2 mm, depth: 0.5 mm) therein was placed in the MEA so that the direction of extension of the ridges on each gas diffusion electrode formed from the nonwoven carbon fiber fabric would be parallel to the direction of extension of the channels in the separator (that is, the direction of orientation of carbon fiber filaments of the gas diffusion electrode was perpendicular to the channels in the separator), such that a polymer electrolyte fuel cell (single cell) having a power generation area of 5 cm$^2$ was obtained.

[Example 2]

The same process as in Example 1 was performed, except that a continuous pressing machine having a roller with indentations and protrusions (the width of an indentation is 113 $\mu$m, the pitch of indentations is 450 $\mu$m, and the depth of an indentation is 100 $\mu$m) was used. In this way, a nonwoven carbon fiber fabric was obtained. Using the obtained nonwoven carbon fiber fabric, the same process as in Example 1 was performed to prepare a polymer electrolyte fuel cell.

[Example 3]

The same process as in Example 1 was performed, except that the aqueous PTFE dispersion given to the gas diffusion electrode was allowed to stand at room temperature to dry. In this way, a nonwoven carbon fiber fabric was obtained. Using the obtained nonwoven carbon fiber fabric, the same process as in Example 1 was performed to prepare a polymer electrolyte fuel cell.

[Example 4]

The same process as in Example 1 was performed, except that the separator was obtained by applying an aqueous PTFE dispersion to the channels in the separator, drying the dispersion at 130°C with the use of a hot air drier, and further heating the dispersion at 380°C for 15 minutes to make the separator water-repellent. In this way, a polymer electrolyte fuel cell was prepared.

[Example 5]

The same process as in Example 1 was performed, except that the MEA was prepared in a manner such that the ridges on the nonwoven carbon fiber fabric were perpendicular to the channels in the separator (that is, the direction of orientation of carbon fiber filaments of the gas diffusion electrode was parallel to the channels in the separator). In this way, a polymer electrolyte fuel cell was prepared.

[Example 6]

The same process as in Example 1 was performed, except that the ridges were formed on the nonwoven carbon fiber fabric so that the direction of extension of the ridges was identical to the direction of orientation of carbon fiber filaments. In this way, a nonwoven carbon fiber fabric was obtained. The same process as in Example 1 was performed, except that the ridges on the obtained nonwoven carbon fiber fabric were parallel to the channels in the separator (that is, the direction of orientation of carbon fiber filaments was parallel to the direction of the channels in the separator). In this way, a polymer electrolyte fuel cell was prepared.

[Comparative Example 1]

The same process as in Example 1 was performed, except that a roller with indentations and protrusions (the pitch of indentations is 1700 $\mu$m, the width of an indentation is 850 $\mu$m, and the depth of an indentation is 100 $\mu$m) was used. In this way, a nonwoven carbon fiber fabric was obtained. Using the obtained nonwoven carbon fiber fabric, the same process as in Example 1 was performed to prepare a polymer electrolyte fuel cell.

[Comparative Example 2]

The same process as in Example 1 was performed, except that a nonwoven carbon fiber fabric with no ridges was used as a gas diffusion electrode. In this way, a polymer electrolyte fuel cell was prepared.

[Comparative Example 3]

The same process as in Example 1 was performed, except that the nonwoven carbon fiber fabric was not provided with a PTFE dispersion and a paste formed from carbon black and PTFE was not applied. In this way, a nonwoven carbon fiber fabric was obtained. Using the obtained nonwoven carbon fiber fabric, the same process as in Example 1 was performed to prepare a polymer electrolyte fuel cell.

Table 1 shows the structures and the results of evaluation on power generation performance of the polymer electrolyte fuel cells prepared in examples and comparative examples.

[Table 1]

| | Nonwoven carbon fiber fabric (gas diffusion electrode) | | | | | Channels in separator | Cell structure | | Power generation performance (0.2 V) (A/cm$^2$) |
|---|---|---|---|---|---|---|---|---|---|
| | Pitch of ridges ($\mu$m) | Ratio of ridge area (L1/L2) | Contact angle of water drop (°) | Condition of how water repellent is attached | Relationship between extension direction of ridges and orientation direction of carbon fiber filaments | Water repellency treatment | Relationship between ridges and channels in separator | Relationship between orientation direction of carbon fiber filaments and channels in separator | |
| Example 1 | 400 | 0.5 | 140 | ○ | Perpendicular | No | Parallel | Perpendicular | 3.6 |
| Example 2 | 400 | 0.25 | 140 | ○ | Perpendicular | No | Parallel | Perpendicular | 3.3 |
| Example 3 | 400 | 0.5 | 140 | × | Perpendicular | No | Parallel | Perpendicular | 3.1 |
| Example 4 | 400 | 0.5 | 140 | ○ | Perpendicular | Yes | Parallel | Perpendicular | 3.5 |
| Example 5 | 400 | 0.5 | 140 | ○ | Perpendicular | No | Perpendicular | Parallel | 3.1 |
| Example 6 | 400 | 0.5 | 140 | ○ | Parallel | No | Parallel | Parallel | 3.3 |
| Comparative Example 1 | 1500 | 0.5 | 140 | ○ | Perpendicular | No | Parallel | Perpendicular | 2.4 |
| Comparative Example 2 | - | - | 140 | - | - | No | - | Perpendicular | 2 |
| Comparative Example 3 | 400 | 0.5 | 90 | - | Perpendicular | No | Parallel | Perpendicular | 2.3 |

DESCRIPTION OF REFERENCE SIGNS

1: Electrolyte membrane
2: Catalyst layer
10: Gas diffusion electrode (nonwoven carbon fiber fabric)
11: Ridge on gas diffusion electrode (nonwoven carbon fiber fabric)
20: Separator
21: Channel in separator

**Claims**

1. A nonwoven carbon fiber fabric which comprises ridges on only one surface thereof and which is provided with a water repellent, the ridges having a pitch L2 that is 20 μm or greater and less than 500 μm; wherein
   the ridges denote linear projections which are regularly arranged on the surface of the nonwoven carbon fiber fabric so as to be substantially parallel to each other,
   the height H1 of a ridge is 10 μm or more, and
   the pitch L2 is the mean of the distances between center lines of adjacent ridges.

2. The nonwoven carbon fiber fabric according to claim 1, wherein a ratio of ridge area L1/L2 is 0.1 to 0.9, wherein L1 is the width of a ridge at a plane S that passes through the midpoint of a normal line extending from the top of a ridge to a reference surface for ridges and that is parallel to the reference surface.

3. The nonwoven carbon fiber fabric according to claim 1 or 2, wherein a contact angle of water drop on the surface that has the ridges thereon is 100 degrees or more.

4. The nonwoven carbon fiber fabric according to any of claims 1 to 3, wherein the water repellent is localized at the ridges.

5. A polymer electrolyte fuel cell comprising:

   a gas diffusion electrode formed from the nonwoven carbon fiber fabric according to any of claims 1 to 4; and
   a separator that has channels in the form of parallel grooves,
   wherein the surface of the gas diffusion electrode which has the ridges thereon is in contact with a surface of the separator which has the channels therein.

6. The polymer electrolyte fuel cell according to claim 5, wherein the separator is stacked on the gas diffusion electrode in a manner such that a direction in which the channels extend is substantially parallel to a direction in which the ridges on the gas diffusion electrode extend.

7. The polymer electrolyte fuel cell according to claim 5, wherein the separator is stacked on the gas diffusion electrode in a manner such that a direction in which the channels extend intersects a direction in which the ridges on the gas diffusion electrode extend.

8. The polymer electrolyte fuel cell according to any of claims 5 to 7, wherein a contact angle of water drop on a wall of each of the channels in the separator is less than 100 degrees.

9. The polymer electrolyte fuel cell according to any of claims 5 to 8, wherein carbon fiber filaments of the gas diffusion electrode are oriented in-plane in one direction and perpendicular to the ridges, such that a tensile strength of the gas diffusion electrode is greater in a direction perpendicular to a direction in which the grooves in the separator extend than in the direction in which the grooves in the separator extend.

10. A process for producing a nonwoven carbon fiber fabric, comprising the steps of:

    A) forming ridges on a surface of a nonwoven carbon-fiber-precursor fabric by pressing, against the surface of the nonwoven carbon-fiber-precursor fabric, a shaping member having indentations and protrusions corresponding to the ridges;
B) carbonizing the nonwoven carbon-fiber-precursor fabric obtained in step A) to obtain a nonwoven carbon fiber fabric; and
C) giving a water repellent to the nonwoven carbon fiber fabric obtained in step B).

**Patentansprüche**

1. Kohlefaservliesstoff, der auf nur einer Oberfläche derselben Stege umfasst und auf dem ein wasserabweisendes Mittel bereitgestellt ist, wobei die Stege einen Teilungsabstand L2 aufweisen, der 20 $\mu$m oder mehr und weniger als 500 $\mu$m beträgt; wobei
die Stege lineare Vorsprünge bezeichnen, die auf der Oberfläche des Kohlefaservliesstoffes regelmäßig angeordnet sind, um im Wesentlichen parallel zueinander zu sein,
die Höhe H1 eines Stegs 10 $\mu$m oder mehr beträgt, und
der Teilungsabstand L2 der Mittelwert der Abstände zwischen Mittellinien benachbarter Stege ist.

2. Kohlefaservliesstoff nach Anspruch 1, wobei ein Verhältnis von Stegbereich L1/L2 0,1 bis 0,9 beträgt, wobei L1 die Breite eines Stegs in einer Ebene S ist, die durch den Mittelpunkt einer Normallinie verläuft, die sich von dem obersten Punkt eines Stegs zu einer Referenzoberfläche für Stege erstreckt, und die zur Referenzoberfläche parallel ist.

3. Kohlefaservliesstoff nach Anspruch 1 oder 2, wobei ein Kontaktwinkel eines Wassertropfens auf der Oberfläche, welche die Stege darauf aufweist, 100 Grad oder mehr beträgt.

4. Kohlefaservliesstoff nach einem der Ansprüche 1 bis 3, wobei das wasserabweisende Mittel an den Stegen angeordnet ist.

5. Polymerelektrolytbrennstoffzelle, die Folgendes umfasst:

   eine Gasdiffusionselektrode, die aus einem Kohlefaservliesstoff nach einem der Ansprüche 1 bis 4 gebildet ist; und
   einen Separator, der Kanäle in Form von parallelen Vertiefungen aufweist,
   wobei die Oberfläche der Gasdiffusionselektrode mit den darauf angeordneten Stegen in Kontakt mit einer Oberfläche des Separators mit den darin angeordneten Kanälen ist.

6. Polymerelektrolytbrennstoffzelle nach Anspruch 5, wobei der Separator auf der Gasdiffusionselektrode derart gestapelt ist, dass eine Richtung, in die sich die Kanäle erstrecken, im Wesentlichen parallel ist zu einer Richtung, in die sich die Stege der Gasdiffusionselektrode erstrecken.

7. Polymerelektrolytbrennstoffzelle nach Anspruch 5, wobei der Separator auf der Gasdiffusionselektrode derart gestapelt ist, dass eine Richtung, in die sich die Kanäle erstrecken, eine Richtung schneidet, in die sich die Stege der Gasdiffusionselektrode erstrecken.

8. Polymerelektrolytbrennstoffzelle nach einem der Ansprüche 5 bis 7, wobei ein Kontaktwinkel eines Wassertropfens auf einer Wand jeder der Stege in dem Separator weniger als 100 Grad beträgt.

9. Polymerelektrolytbrennstoffzelle nach einem der Ansprüche 5 bis 8, wobei Kohlenstofffaserfilamente der Gasdiffusionselektrode auf derselben Ebene in eine Richtung und normal zu den Stegen orientiert sind, sodass eine Zugfestigkeit der Gasdiffusionselektrode in eine Richtung, die normal auf eine Richtung ist, in die sich die Kanäle in dem Separator erstrecken, größer ist als jene in die Richtung, in die sich die Kanäle in dem Separator erstrecken.

10. Verfahren zur Herstellung von Kohlefaservliesstoff, das die folgenden Schritte umfasst:

    A) Bildung von Stegen auf einer Oberfläche eines Vorläufer-Kohlefaservliesstoffs durch das Pressen eines Formbauteils mit Vertiefungen und Vorsprüngen, die den Stegen entsprechen, auf die Oberfläche des Vorläufer-Kohlefaservliesstoffs;
    B) Karbonisieren des in Schritt A) erhaltenen Vorläufer-Kohlefaservliesstoffs, um den Kohlefaservliesstoff zu erhalten; und

**EP 3 231 916 B1**

C) Aufbringen eines wasserabweisenden Mittels auf den in Schritt B) erhaltenen Kohlefaservliesstoff.

**Revendications**

1. Tissu en fibres de carbone non-tissé qui comprend des nervures sur une seule de ses surfaces de celle-ci et qui est pourvu d'un agent hydrofuge, les nervures ayant un pas L2 qui est de 20 $\mu$m ou plus et moins de 500 $\mu$m ; dans lequel
les nervures désignent des projections linéaires qui sont régulièrement disposées sur la surface du tissu en fibres de carbone non-tissé de manière à être sensiblement parallèles les unes aux autres,
la hauteur H1 d'une nervure est de 10 $\mu$m ou plus, et
le pas L2 est la moyenne des distances entre les lignes centrales des nervures adjacentes.

2. Tissu en fibres de carbone non-tissé selon la revendication 1, dans lequel le rapport de la surface de la nervure L1/L2 est compris entre 0,1 et 0,9, dans lequel L1 est la largeur d'une nervure dans un plan S qui passe à travers le milieu d'une ligne normale s'étendant du sommet d'une nervure à une surface de référence pour les nervures et qui est parallèle à la surface de référence.

3. Tissu en fibres de carbone non-tissé selon la revendication 1 ou 2, dans lequel l'angle de contact de la goutte d'eau sur la surface qui a les nervures est de 100 degrés ou plus.

4. Tissu en fibres de carbone non-tissé selon l'un des revendications 1 à 3, dans lequel l'agent hydrofuge est localisé au niveau des nervures.

5. Pile à combustible à électrolyte polymère comprenant :

    une électrode à diffusion de gaz formée à partir du tissu en fibres de carbone non-tissé selon l'une quelconque des revendications 1 à 4 ; et
    un séparateur qui a des canaux en forme de rainures parallèles,
    dans laquelle la surface de l'électrode à diffusion de gaz sur laquelle se trouvent les nervures est en contact avec une surface du séparateur dans laquelle se trouvent les canaux.

6. Pile à combustible à électrolyte polymère selon la revendication 5, dans laquelle le séparateur est empilé sur l'électrode à diffusion de gaz de telle sorte qu'une direction dans laquelle les canaux s'étendent soit sensiblement parallèle à une direction dans laquelle les nervures sur l'électrode à diffusion de gaz s'étendent.

7. Pile à combustible à électrolyte polymère selon la revendication 5, dans laquelle le séparateur est empilé sur l'électrode à diffusion de gaz de manière telle qu'une direction dans laquelle les canaux s'étendent intersecte une direction dans laquelle les nervures sur l'électrode à diffusion de gaz s'étendent.

8. Pile à combustible à électrolyte polymère conforme à l'un des revendications 5 à 7, dans lesquelles l'angle de contact de la goutte d'eau sur une paroi de chacun des canaux dans le séparateur est inférieur à 100 degrés.

9. Pile à combustible à électrolyte polymère selon l'une quelconque des revendications 5 à 8, dans laquelle les filaments de fibre de carbone de l'électrode à diffusion gazeuse sont orientés dans le plan dans une direction et perpendiculairement aux arêtes, de sorte qu'une résistance à la traction de l'électrode à diffusion gazeuse est plus grande dans une direction perpendiculaire à une direction dans laquelle les gorges du séparateur s'étendent que dans la direction dans laquelle des gorges du séparateur s'étendent.

10. Procédé de production d'un tissu de fibres de carbone non tissé, comprenant les étapes consistant à :

    A) former des arêtes sur une surface d'un tissu non tissé précurseur de fibres de carbone en pressant contre la surface de l'étoffe non tissée précurseur de fibres de carbone, un élément de formage comportant des empreintes et des saillies correspondant aux arêtes ;
    B) carboniser le tissu précurseur de fibres de carbone non tissé obtenu à l'étape A) pour obtenir un tissu de fibres de carbone non tissé ; et
    C) donner un hydrofuge au tissu de fibres de carbone non tissé obtenu à l'étape B).

15

DRAWINGS

Figure 1

Figure 2

Figure 3A

Figure 3B

Figure 3C

Figure 3D

Figure 3E

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11511289 W
- JP 2003017076 A
- JP 2009140810 A
- EP 3088582 A1
- EP 2357695 A1
- EP 1336999 A1
- WO 2014012649 A1